# EUROPÄISCHE PATENTSCHRIFT

(11) **EP 0 479 806 B1**
(45) Veröffentlichungstag und Bekanntmachung des Hinweises auf die Patenterteilung: **27.04.1994**
(21) Anmeldenummer: 90908476.6
(22) Anmeldetag: 31.05.1990
(51) Int. Cl.: G06F 11/00, G06F 1/24

(54) **MIKROPROZESSOR-SCHALTUNGSANORDNUNG MIT WATCHDOG-SCHALTUNG UND VERFAHREN DAZU**
MICROPROCESSOR WITH WATCHDOG CIRCUIT AND PROCEDURE THEREFOR
CIRCUIT MICROPROCESSEUR AVEC CIRCUIT DE CONTROLE DE SEQUENCE (WATCHDOG) ET METHODE POUR CELUI CI

(30) Priorität: 24.06.1989 DE 3920696
(43) Veröffentlichungstag der Anmeldung: 15.04.1992
(73) Patentinhaber: ROBERT BOSCH GMBH, 70442 Stuttgart (DE)
(72) Erfinder: WELLER, Hugo, D-7141 Oberriexingen (DE); TAUFER, Peter, D-7253 Renningen 2 (DE); BALZER, Knut, D-7140 Ludwigsburg-Pflugfelden (DE); BURGER, Wilfried, Dr., D-7254 Hemmingen (DE)
(86) Internationale Anmeldenummer: DE9000407
(87) Internationale Veröffentlichungsnummer: WO9100569

(56) Entgegenhaltungen:
- EP-A- 0 266 837
- US-A- 4 586 179
- US-A- 4 803 682
- Patent Abstracts of Japan, Band 8, Nr. 60 (P-262)(1497), 22. März 1984, & JP A 58211255

## Beschreibung

### Stand der Technik

Die Erfindung betrifft eine Mikroprozessor-Schaltungsanordnung mit einer den korrekten Prozessor-Programmablauf überwachenden Watchdog-Schaltung, die vom Mikroprozessor in bestimmten Zeitabständen angesteuert werden muß, da sie andernfalls ein Rücksetzen (Reset-Funktion) des Mikroprozessors auf den Programmstart oder dergleichen durchführt.

In Mikroprozessor-Schaltungsanordnungen ist es bekannt Watchdog-Schaltungen einzusetzen, die den Prozessor-Programmablauf überwachen. Bei korrektem Programmablauf steuert der Mikroprozessor in bestimmten Zeitabständen die Watchdog-Schaltung an. Dieses führt dazu, daß der Programmablauf des Mikroprozessors ungehindert fortgeführt werden kann. Sofern jedoch eine Fehlfunktion auftritt, beispielsweise dadurch, daß der Mikroprozessor bei einem Programmschritt "hängen bleibt", entfällt die Ansteuerung der Watchdog-Schaltung, was letztere zur Abgabe eines Reset-Impulses veranlaßt, der dem Mikroprozessor zugeführt wird. Der Mikroprozessor wird hierdurch auf den Programmstart oder dergleichen rückgesetzt (Reset-Funktion).

So ist aus US-A-4 803 682 eine Mikroprozessor-Schaltungsanordnung mit einer den korrekten Prozessor-Programmablauf überwachenden Watchdog-Schaltung gemäß dem Oberbegriff des Anspruchs 1 bekannt, bei der ein weiteres Rücksetzsignal erzeugt wird, wenn eine Folge von Übertragungsfehlern zwischen einer ersten Mikroprozessorschaltung und weiteren untergeordneten Mikroprozessorschaltungen auftritt, wobei alle Mikroprozessorschaltungen mittels einer gemeinsamen Übertragungsleitung verbunden sind. Falls eines der Rücksetzsignale auftritt, wird die Vielzahl von untergeordneten Mikroprozessorschaltungen zurückgesetzt.

Bei der Überwachungsschaltung nach den Druckschriften Patent Abstracts of Japan, Band 8, Nr. 60 (P-262) (1497), 22. März 1984 & JP-A-58 211 255 ist die Watchdog-Schaltung als spezieller Mikrocomputer ausgebildet welcher weitere Mikrocomputer zurücksetzt, falls diese weiterlaufen, ohne an ihrem Ausgang bestimmte Impulsfolgen innerhalb eines bestimmten Zeitabschnitts abzugeben.

Die Druckschrift US-A-4 586 179 offenbart zusätzlich eine Spannungspegelüberwachung, die den Mikroprozessor zurücksetzt, falls die Eingangsspannung unter einen bestimmten Wert fällt. Eine Einschaltstromüberwachung, welche zwischen Spannungspegelüberwachung und Watchdog-Schaltung gekoppelt ist, gewährleistet, daß eine nachgeschaltete Resettrigger-Schalter den Mikroprozessor so lange im Reset-Zustand hält, bis die Eingangsspannung ein bestimmtes Niveau erreicht, welches einen normalen Mikroprozessor-Betrieb erlaubt.

Das Datenverarbeitungssystem gemäß der Druckschrift EP-A-0 266 837 schließlich enthält als Watchdog-Timer einen getakteten Zähler, dessen erster Ausgang an einen Rücksetzeingang des Mikrocomputers gekoppelt ist. Um die Anzahl der Fehlfunktionen zu erhöhen, auf welche die Watchdog-Schaltung reagiert, ist der Mikrocomputer so ausgestattet, daß er wiederholt Resetsignal-Bytes innerhalb eines bestimmten Zeitfensters generiert, wobei diese Zeitfenster Zeitabschnitten entsprechen, während denen ein weiterer Ausgang des Zählers auf logisch "1" gesetzt ist. Allerdings können derartige Fehlfunktionen nur dann erkannt werden, wenn sich das gesamte Datenverarbeitungssystem im Schreibmodus befindet. In diesem Schreibmodus wird der Mikrocomputer zurückgesetzt, wenn ein vom Mikroprozessor ausgegebenes Byte nicht mit einem zum Beispiel im RAM gespeicherten Byte übereinstimmt. Auf diese Weise wird vermieden, daß der Mikroprozessor fälschlicherweise einen Programmteil durchläuft, in dem dann relevante Speicherplätze überschrieben werden. In diesem Fall wird automatisch ein zusätzliches Rücksetzsignal für den Mikrocomputer generiert.

### Vorteile der Erfindung

Die erfindungsgemäße Schaltungsanordnung mit den im Hauptanspruch genannten Merkmalen zeichnet sich dadurch aus, daß der Mikroprozessor beim Auftreten einer von ihm erkannten Fehlfunktion eine Reset-Funktion dadurch auslöst, daß er eine Fehlansteuerung der Watchdog-Schaltung vornimmt, so daß diese den Reset-Impuls abgibt. Hierdurch erfolgt das Rücksetzen des Mikroprozessors auf seinem Programmstart oder dergleichen. Eine für die genannte Überwachungsfunktion des Mikropozessors erforderliche Reset-Schaltung zur Erzeugung des Reset-Impulses kann aufgrund der erfindungsgemäßen doppelten Ausnutzung der Watchdog-Schaltung entfallen. Durch den Fortfall der Reset-Schaltung lassen sich Bauteile einsparen. Überdies vereinfacht sich demgemäß der Schaltungsaufbau und seine Montage. Ferner verringert sich auch der Raumbedarf der erfindungsgemäßen Mikroprozessor-Schaltungsanordnung, da weniger Bauteile eingesetzt werden.

Nach einer Weiterbildung der Erfindung ist vorgesehen, daß die Watchdog-Schaltung als Fenster-Watchdog-Schaltung ausgebildet ist. Nur wenn innerhalb des Zeitfensters eine Ansteuerung der Watchdog-Schaltung durch den Mikroprozessor erfolgt, liegt ein einwandfreier Prozessor-Programmablauf vor. Nimmt der Mikroprozessor die erfindungsgemäße Fehlansteuerung vor, so erfolgt dieses außerhalb des Zeitfensters. Die Fehlansteuerung durch den Mikroprozessor kann vorzugsweise durch in Relation zur Zeitfensterfolge zu häufige Bedienung (Ansteuerung) der Watchdog-Schaltung erfolgen, so daß Ansteuerimpulse auftreten, die außerhalb des Zeitfensters liegen und die bewirken, daß die Reset-Funktion spätestens sofort nach der zweiten Bedienung ausgelöst wird.

Nach einer Weiterbildung der Erfindung nimmt der Mikroprozessor eine Überwachung auf eine Fehlfunktion bei sich selbst und/oder bei anderen Bauelementen und/oder Schaltungsanordnungs-Bestandteilen vor. Die nach der erfindungsgemäßen Lehre hervorgerufene Reset-Funktion wird also - anders als beim Stand der Technik - nicht bei Fehlern im Programmablauf ausgelöst, sondern immer dann, wenn der Mikroprozessor einen andersartig gelagerten Fehler erkennt und es für notwendig erachtet, den Programmablauf zu unterbrechen, um ihn erneut durch seine gezielte Fehlansteuerung der Watchdog-Schaltung zu starten.

Die Erfindung ist ferner durch ein Verfahren zur Überwachung des korrekten Prozessor-Programmablaufs einer mit Watchdog-Schaltung versehenen Mikroprozessor-Schaltungsanordnung gekennzeichnet, wobei der Mikroprozessor in bestimmten Zeitabständen die Watchdog-Schaltung ansteuert, da diese andernfalls ein Rücksetzen (Reset-Funktion) des Mikroprozessors auf den Programmstart oder dergleiche durchführt und wobei der Mikroprozessor beim Auftreten einer von ihm erkannten Fehlfunktion zur Auslösung einer von der Watchdog-Schaltung stammenden Reset-Funktion eine gezielte Fehlansteuerung der Watchdog-Schaltung vornimmt.

### Zeichnung

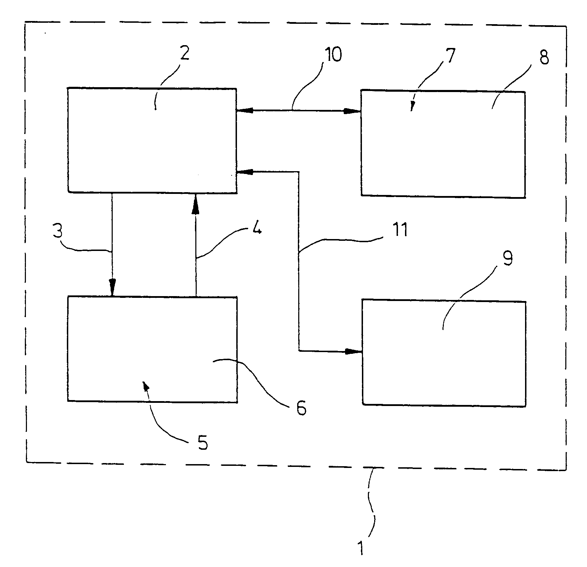

Die Erfindung wird im folgenden anhand der Figur näher erläutert. Diese zeigt: ein Blockschaltbild einer Mikroprozessor-Schaltungsanordnung.

### Beschreibung des Ausführungsbeispiels

Gemäß der Figur weist die Mikroprozessor-Schaltungsanordnung 1 einen Mikroprozessor 2 auf, der über Datenleitungen 3 und 4 mit einer Watchdog-Schaltung 5 verbunden ist. Die Watchdog-Schaltung 5 ist als Fenster-Watchdog-Schaltung 6 ausgebildet.

Ferner ist schematisch eine Schaltung 7 vorgesehen. Diese stellt repräsentativ einen bestimmten Schaltungsanordnungs-Bestandteil 8 der Mikorprozessor-Schaltungsanordnung 1 dar. Es können mehrere derartige Schaltungsanordnungs-Bestandteile 8 vorgesehen sein, wobei in der Figur jedoch nur einer dargestellt ist.

Überdies weist die Mikroprozessor-Schaltungsanordnung 1 Bauelemente 9 auf. Diese Bauelemente 9 sind Bestandteile der Gesamtschaltung; sie können daher der oder den Schaltungsanordnungs-Bestandteilen 8 oder anderen Baugruppen angehören. Es handelt sich dabei um systemkritische Bauelemente, deren Funktion überwacht werden soll. Der Mikroprozessor 2 steht über eine Leitung 10 mit dem Schaltungsanordnungs-Bestandteil 8 und über eine Leitung 11 mit den Bauelementen 9 in Verbindung. Die Mikroprozessor-Schaltungsanordnung 1 weist folgende Funktionen auf:

Im Normalbetrieb steuert der Mikroprozessor 2 in bestimmten Zeitabständen über die Datenleitung 3 die Watchdog-Schaltung 5 an. Sofern ein Fehler im Programmablauf erfolgt, enfällt diese programmgesteuerte Ansteuerung und dieses führt dazu, daß die Watchdog-Schaltung 5 einen Reset-Impuls erzeugt und diesen über die Datenleitung 4 dem Mikroprozessor 2 zuführt, wodurch dieser auf seinem Programmstart oder dergleichen rückgesetzt wird (Reset-Funktion).

Erfindungsgemäß ist nunmehr vorgesehen, daß nicht nur der zuvor beschriebene Prozessor-Programmablauf überwacht wird, sondern auch andere Funktionen der Mikroprozessor-Schaltungsanordnung 1. Tritt eine Fehlfunktion beispielsweise beim Mikroprozessor 2 selbst oder aber bei einem Schaltungsanordnungs-Bestandteil 8 oder einem Bauelement 9 auf und wird dieses von dem Mikroprozessor 2 erkannt, so nimmt dieser eine derartige Fehlansteuerung der Watchdog-Schaltung 5 über die Datenleitung 3 vor, so daß die Watchdog-Schaltung 5 einen Reset-Impuls erzeugt und diesen über die Datenleitung 4 dem Mikroprozessor 2 zuführt, wodurch der Prozessor-Programmablauf gestoppt wird. Über die Leitungen 10 und 11 fragt der Mikroprozessor 2 somit die Schaltung 7 und auch die zu überwachenden Bauelemente 9 ständig auf einwandfreie Funktion ab. Ferner überprüft er selbst intern auch seine eigene Funktion.

Die vom Mikroprozessor 2 vorgenommene Fehlansteuerung der Watchdog-Schaltung 5 wird vorzugsweise derart vorgenommen, daß außerhalb der Zeitfenster der als Fenster-Watchdog-Schaltung 6 ausgebildeten Wachtdog-Schaltung 5 gelegene Ansteuerungen vorgenommen werden. Insbesondere ist es vorteilhaft, wenn eine zu häufige Ansteuerung der Watchdog-Schaltung derart erfolgt, daß Ansteuerimpulse auftreten, die zwischen den Zeitfenstern der Fenster-Watchdog-Schaltung 6 liegen. Dieses führt dann spätestens sofort nach der zweiten Ansteuerung zur Erzeugung des Reset-Impulses, der den Mikroprozessor 2 rücksetzt.

Die erfindungsgemäße Schaltungsanordnung benötigt demgemäß für die geschilderte Fehlfunktions-Überwachung keine gesonderte Reset-Schaltung zur Erzeugung des notwendigen Reset-Impulses, da durch die gezielte, erfindungsgemäße Fehlansteuerung der Watchdog-Schaltung 5 letzere die Reset-Impulserzeugung mit übernimmt. Insofern vereinfacht sich der Schaltungsaufbau und es können auch Bauteile eingespart werden.

## Patentansprüche

1. Mikroprozessor-Schaltungsanordnung mit einer den korrekten Prozessor-Programmablauf überwachenden Watchdog-Schaltung, die vom Mikroprozessor in bestimmten Zeitabständen angesteuert werden muß, da sie andernfalls ein Rücksetzten (Reset-Funktion) des Mikroprozessors auf den Programmstart oder dergleichen durchführt, **dadurch gekennzeichnet**, daß der Mikroprozessor (2) beim Auftreten einer von ihm erkannten Fehlfunktion zur Auslösung einer von der Watchdog-Schaltung (5) stammenden Reset-Funktion eine gezielte Fehlansteuerung der Watchdog-Schaltung (5) vornimmt.

2. Schaltungsanordnung nach Anspruch 1 **dadurch gekennzeichnet**, daß die Watchdog-Schaltung (5) als Fenster-Watchdog-Schaltung (6) ausgebildet ist.

3. Schaltungsanordnung nach einem der vorhergehenden Ansprüche, **dadurch gekennzeichnet**, daß die Fehlansteuerung außerhalb des Zeitfensters der Watchdog-Schaltung (5) erfolgt.

4. Schaltungsanordnung nach einem der vorhergehenden Ansprüche, **dadurch gekennzeichnet**, daß die Fehlansteuerung durch zu häufige Bedienung (Ansteuerung) der Watchdog-Schaltung (5) erfolgt.

5. Schaltungsanordnung nach einem der vorhergehenden Ansprüche, **dadurch gekennzeichnet**, daß der Mikroprozessor (2) eine Überwachung auf eine Fehlfunktion bei sich selbst und/oder bei anderen Bauelementen (9) und/oder Schaltungsanordnungs-Bestandteilen (8) vornimmt.

6. Verfahren zur Überwachung des korrekten Prozessor-Programmablaufs einer mit Watchdog-Schaltung versehenen Mikroprozessor-Schaltungsanordnung, wobei der Mikroprozessor in bestimmten Zeitabständen die Watchdog-Schaltung ansteuert, da diese andernfalls ein Rücksetzten (Reset-Funktion) des Mikroprozessors auf den Programmstart oder dergleichen durchführt, insbesondere zum Betrieb der Mikroprozessor-Schaltungsanordnung nach einem oder mehreren der vorhergehenden Ansprüche 1 bis 5, **dadurch gekennzeichenet**, daß der Mikroprozessor (2) beim Auftreten einer von ihm erkannten Fehlfunktion zur Auslösung einer von der Watchdog-Schaltung (5) stammenden Reset-Funktion eine gezielte Fehlansteuerung der Watchdog-Schaltung (5) vornimmt.

## Claims

1. Microprocessor circuit arrangement having a watchdog circuit monitoring the correct processor program execution which must be activated by the microprocessor at specific time intervals as otherwise it resets (reset function) the microprocessor to the start of the program or the like, characterized in that, following the occurrence of a malfunction detected by it, the microprocessor (2) performs a deliberate erroneous activation of the watchdog circuit (5) to trigger a reset function originating from the watchdog circuit (5).

2. Circuit arrangement according to Claim 1, characterized in that the watchdog circuit (5) is designed as a window watchdog circuit (6).

3. Circuit arrangement according to one of the preceding claims, characterized in that the erroneous activation is performed outside the time window of the watchdog circuit (5).

4. Circuit arrangement according to one of the preceding claims, characterized in that the erroneous activation is performed by too frequent driving (activation) of the watchdog circuit (5).

5. Circuit arrangement according to one of the preceding claims, characterized in that the microprocessor (2) monitors itself and/or other components (9) and/or circuit arrangement constituents (8) for a malfunction.

6. Method for monitoring the correct processor program execution of a microprocessor circuit arrangement provided with a watchdog circuit, in which the microprocessor activates the watchdog circuit at specific time intervals, since the latter otherwise resets (reset function) the microprocessor to the start of the program or the like, in particular for the operation of the microprocessor circuit arrangement according to one or more of the preceding Claims 1 to 5, characterized in that, following the occurrence of a malfunction detected by it, the microprocessor (2) performs a deliberate erroneous activation of the watchdog circuit (5) to trigger a reset function originating from the watchdog circuit (5).

## Revendications

1. Circuit microprocesseur avec un circuit de contrôle de séquence surveillant le déroulement correct du programme d'un processeur, ce circuit devant être commandé par le microprocesseur à des intervalles de temps déterminés car sinon il exécute la remise à l'état initial (Reset) du microprocesseur sur le début du programme ou analogue, caractérisé en ce qu'à l'arrivée d'une fonction d'erreur qu'il reconnaît pour déclencher une fonction de remise à l'état initial issue du circuit de contrôle de séquence (5), le microprocesseur (2) effectue une commande d'erreur prédéterminée pour le circuit de contrôle de séquence (5).

2. Circuit selon la revendication 1, caractérisé en ce que le circuit de contrôle de séquence (5) est un circuit de contrôle de séquence à fenêtre (6).

3. Circuit selon l'une des revendications précédentes, caractérise en ce que la commande d'erreur se fait en dehors de la fenêtre de temps du circuit de contrôle de séquence (5).

4. Circuit selon l'une des revendications précédentes, caractérisé en ce que la commande d'erreur se fait par une utilisation en fréquence (commande de démarrage) du circuit de contrôle de séquence (5).

5. Circuit selon l'une des revendications précédentes, caractérisé en ce que le microprocesseur (2) effectue une surveillance pour les fonctions d'erreur, de lui-même et/ou pour d'autres composants (9) et/ou pour des parties (8) du circuit.

6. Procédé de contrôle du déroulement correct d'un programme de processeur à l'aide d'un circuit microprocesseur équipé d'un circuit de contrôle de séquence, selon lequel le microprocesseur démarre à des intervalles de temps déterminés, le circuit de contrôle de séquence car sinon celle-ci effectue une remise à l'état initial (Reset) du microprocesseur au départ du programme ou analogue, notamment pour la mise en oeuvre d'un circuit microprocesseur selon l'une ou plusieurs des revendications précédentes 1 à 5, caractérisé en ce que lorsqu'il y a une fonction d'erreur qu'il reconnaît, pour déclencher une fonction de remise à l'état initial provenant du circuit de contrôle de séquence (5), le microprocesseur (2) effectue un démarrage erroné, intentionnel, du circuit de contrôle de séquence (5).
